# EUROPÄISCHE PATENTSCHRIFT

(11) **EP 1 761 591 B1**
(45) Veröffentlichungstag und Bekanntmachung des Hinweises auf die Patenterteilung: **20.07.2016**
(21) Anmeldenummer: 05742855.9
(22) Anmeldetag: 12.05.2005
(51) Int. Cl.: C08J 9/00, C08J 9/10

(54) **KUNSTSTOFF-SCHAUMMATERIAL UND DESSEN VERWENDUNG**
PLASTIC FOAM MATERIAL AND USE THEREOF
MATERIAU ALVEOLAIRE EN PLASTIQUE ET UTILISATION DUDIT MATERIAU

(30) Priorität: 21.05.2004 DE 102004025157
(43) Veröffentlichungstag der Anmeldung: 14.03.2007
(73) Patentinhaber: Benecke-Kaliko Aktiengesellschaft, D-30419 Hannover (DE)
(72) Erfinder: OHLINGER, Rainer, 30519 Hannover (DE); WEMPE, Thomas, 49179 Ostercappeln (DE)
(74) Vertreter: Finger, Karsten
(86) Internationale Anmeldenummer: PCT/EP2005/052166
(87) Internationale Veröffentlichungsnummer: WO 2005/113655

(56) Entgegenhaltungen:
- EP-A- 0 331 447
- EP-B1- 0 704 476
- WO-A-01/70859
- US-A- 3 950 278
- PATENT ABSTRACTS OF JAPAN Bd. 1996, Nr. 10, 31. Oktober 1996 (1996-10-31) & JP 08 143694 A (SEKISUI CHEM CO LTD), 4. Juni 1996 (1996-06-04)
- DATABASE WPI Derwent Publications Ltd., London, GB; AN 1983-767234 XP002335136 "Manufacture crosslinked propylene-butene copolymer resin foam - of improved adhesiveness, compression creep and vacuum formability, used, e.g., for internal finishing of motor vehicles" & JP 58 134130 A (HITACHI CHEM CO LTD) 10. August 1983 (1983-08-10)
- PATENT ABSTRACTS OF JAPAN Bd. 1996, Nr. 07, 31. Juli 1996 (1996-07-31) & JP 08 059872 A (SEKISUI CHEM CO LTD), 5. März 1996 (1996-03-05)

## Beschreibung

Die Erfindung betrifft ein Kunststoff-Schaummaterial auf Basis von Polyolefinen, die 50 bis 90 Gew.-% auf Polypropylen basierende Kunststoffe mit einem Schmelzflussindex MFI (230°C/2,16 kg) von 0,5 bis 0,9 g/10 min und 10 bis 50 Gew.-% auf Polyethylen basierende Kunststoffe mit einem Schmelzflussindex MFI (190°C/2,16 kg) zwischen 0,5 und 1,9 g/10 min enthält und das Kunststoff- Schaummaterial eine Dichte von 0,03 bis 0,2 g/cm3 aufweist, und dessen Verwendung in Kraftfahrzeugen, Flugzeugen und dergleichen, insbesondere zur Herstellung von Innenverkleidungen oder -verkleidungsteilen.

Kunststoff-Schaummaterialien der oben beschriebenen Art ergeben sich aus der EP 0 704 476 B1. Diese beschreibt ein Kunststoff-Schaummaterial, bestehend aus einer auf Polyolefin basierenden Zusammensetzung, die besteht aus: zwischen 40 und 95 Gew.-% von auf Polypropylen basierenden Kunststoffen mit einem Schmelzflussindex (MFI) von 0,05 bis 12 g/10 min, zwischen 5 und 60 Gew.-% von auf Polyethylen basierenden Kunststoffen mit einem Schmelzindex (MFI) von 2 bis 50 g/10 min. Das Kunststoff-Schaummaterial enthält zwischen 20 und 65 Gew.-% vernetzten Anteil und hat eine Dichte von 0,02 bis 0,2 g/cm3. Der vernetzte Anteil soll zu 55 bis 95 Gew.-% aus vernetztem Polypropylen und 5 bis 45 Gew.-% vernetztem Polyethylen bestehen. In allgemeiner Form wird ein derartiges Kunststoffmaterial wie folgt hergestellt: Es werden etwa 40 bis 95 Gew.-% eines auf Polypropylen basierenden Kunststoffs und etwa 5 bis 60 Gew.-% eines auf Polyethylen basierenden Kunststoffs mit einem Vernetzungsmittel und einem Schaummittel zur Herstellung der Kunststoffzusammensetzung gemischt. Hieraus wird z.B. durch Extrusion eine Folie hergestellt. Diese wird einer ionisierenden Strahlungsquelle ausgesetzt, um eine vernetzte Folie zu erhalten. Die Dosierung der ionisierenden Strahlungsquelle soll 1,0 bis 6,0 Mrad betragen. Die ionisierende Behandlung wird so lange fortgeführt, bis der vernetzte Anteil in der KunststoffZusammensetzung 20 bis 65 Gew.-% beträgt. Es schließt sich ein Erhitzen der vernetzten Kunststofffolie an, um ein Kunststoff-Schaummaterial in einer Dichte von 0,02 bis 0,2 g/cm3 zu erhalten. Dies kann in einem üblichen Schäumungsofen bei einer Temperatur von etwa 250°(erfolgen, wodurch das einbezogene Schaummittel thermisch zersetzt wird, um das Kunststoff-Schaummaterial entstehen zu lassen.

Die bekannte technische Lehre stellt insbesondere darauf ab, dass ein Kunststoff-Schaummaterial mit überlegenen Verformungseigenschaften hergestellt werden soll, das sich gut auf die Oberflache von Substraten aufbringen lasst, eine überlegene Hitzebeständigkeit, eine verbesserte Dehnung bei hohen Temperaturen und überlegene Sekundärbehandlungseigenschaften aufweist. Nach der Offenbarung der EP 0 704 476 B1 müssen hierzu die bezeichneten Rahmenbedingungen strikt eingehalten werden. Dies gilt insbesondere für den MFI-Wert des auf Polyethylen basierenden Kunststoffs. So sollen dann nachteilige Effekte im Hinblick auf das Verformungsverfahren auftreten, wenn der MFI-Wert des auf Polyethylen basierenden Kunststoffs unter 2 g/10 min fällt. Es soll dann nicht möglich sein, aus dem Kunststoff-Schaummaterial die wünschenswerten Produkte herzustellen. Darüber hinaus soll die Extrusion des Kunststoff-Schaummaterials weitgehend unmöglich sein, wenn der MFI-Wert des auf Polyethylen basierenden Kunststoffs unter dem angegebenen kritischen Wert von 2 g/10 min liegt. Ein MFI-Wert von etwa 2 g/10 min soll insbesondere das umfassende Erscheinungsbild des Kunststoff-Schaummaterials beeinträchtigen. Darüber hinaus soll die Kompatibilität zwischen dem Polyethylen und dem Polypropylen bzw. einem darauf basierenden Material beeinträchtigt werden. Der EP 0 704 476 B1 lassen sich demzufolge strikte Hinweise dahingehend entnehmen, dass der MFI-Wert des herangezogenen Polyolefins oder Copolymers von Polyolefin zur Herstellung des bekannten Kunststoff-Schaummaterials nicht unter 2 g/10 min zu senken ist, da dann nicht das gewünschte Produkt entsteht.

Es hat sich überraschenderweise gezeigt, dass die oben angesprochenen Probleme beim Unterschreiten des MFI-Wertes für Polyethylen bzw. eines auf Polyethylen basierenden Kunststoffs unter Zugrundelegung der oben beschriebenen vorbekannten Lehre der EP 0 704 476 B1 von weniger als 2 g/10 min nicht auftreten, wenn gemäß der später detailliert dargestellten Verfahrensweise gemäß den Beispielen vorliegender Anmeldung vorgegangen wird. Der Grund hierfür wird noch im Einzelnen dargestellt.

Schaummaterialien für z. B. Automobilinnenverkleidungen auf der Basis von Polypropylen und Polyethylen sind auch aus JP 08 059872 A bekannt. In JP 08 059872 A werden, keine Gleitmittel genannt. Zudem ist vor allem der MFI der verwendeten Polyethylene nicht explizit genannt, so dass die fachkundige Person, besonders auf der Basis der Lehre von EP 0 704 476 A1, von einem MFI >2g/10 min ausgehen wird.

Gegenstand der Erfindung ist demzufolge ein Kunststoff-Schaummaterial auf Basis von Polyolefinen, die 50 bis 90 Gew.-% auf Polypropylen basierende Kunststoffe mit einem Schmelzflussindex MFI (230°C/2,16 kg) von 0,5 bis 0,9 g/10 min und 10 bis 50 Gew.-% auf Polyethylen basierende Kunststoffe mit einem Schmelzflussindex MFI (190°C/ 2, 16 kg) zwischen 0,5 und 1,9 g/10 min enthalten und das Kunststoff-Schaummaterial eine Dichte von 0,03 bis 0,2 g/cm3 aufweistund 20 bis 70 Gew.-% vernetzten Polyolefin-Anteil und ein Gleitmittel enthält und wobei das Kunststoff-Schaummaterial durch Vernetzung mit einer ionisierenden Strahlungsquelle erhältlich ist und wobei der auf Polyethylen basierende Kunststoff in einer kontinuierlichen Matrix auf der Basis des auf Polypropylen basierenden Kunststoffes dispergiert ist

Die Erfindung lässt sich vielfältig vorteilhaft ausgestalten: Die nachfolgend noch angesprochenen Vorteile werden insbesondere erreicht, wenn der vernetzte Polyolefin-Anteil zu 55 bis 95 Gew.-% auf Polypropylen basierendem und zu 5 bis 45 Gew.-% auf Polyethylen basierendem Kunststoff beruht. Ein besonders bevorzugter Rahmen liegt zwischen etwa 60 und 80 Gew.-% Polypropylen und 40 bis 20 Gew.-% Polyethylen. Der hierfür geltende Gesamtrahmen ist mit 20 bis 70 Gew.- % vernetztem Polyolefin-Anteil wesentlich. Hier gilt als bevorzugter Rahmen für das Kunststoff-Schaummaterial etwa 30 bis 60 Gew.-% vernetzter Polyolefin-Anteil.

Es gibt verschiedene Verfahren, um den vernetzten Anteil des Polyolefins des Kunststoff-Schaummaterials gemäß der Erfindung zu bestimmen. Eine Möglichkeit besteht darin, den entsprechenden Gelgehalt zu erfassen, wobei der vernetzte Polymeranteil mit Hilfe einer Xylol-Extraktion bestimmt wird. Dies erfolgt bei einer Temperatur von 145°C. Der vernetzte unlösliche Anteil kann nach Trocknung auf die eingewogene Menge Schaum bezogen werden. Die prozentuale Aufteilung des vernetzten Anteils von auf Polyethylen basierendem Kunststoff und auf Polypropylen basierendem Kunststoff kann wie folgt durchgeführt werden: Der angesprochene Rest wird nach der Extraktion gaschromatographisch erfasst, indem eine Hydrierung und eine Thermozersetzungs-Technik durchgeführt wird. Der angesprochene und durch Xylol-Extraktion erhaltene Rückstand wird thermisch bei 700°C zersetzt. Wasserstoffgas wird dann eingeleitet, um das thermisch zersetzte Gas zu hydrieren. Das hydrierte Gas wird mit einem G-6800 Gaschromatographen (Gaschromatograph vom Hydrierungs-Typ, hergestellt von der Firma Yanagimoto Seisaushoaka). Ferner kann die angesprochene prozentuale Aufteilung der vernetzten Ausgangsmaterialien mit der C13-Kernresonanz-Spektroskopie bestimmt werden. So kann die Menge an tertiären C-Atomen, wie sie im Polypropylen anzutreffen sind, quantitativ im unlöslichen und getrockneten Gel-Anteil des Kunststoff-Schaummaterials bestimmt werden. Zweckdienlicher Weise werden dabei Eichkurven, erstellt aus den eingesetzten Ausgangsharzen von statistischem Co-Polymerisat von Propylen mit Ethylen und linearem Polyethylencopolymerisat mit α-Olefinen, mitverwendet.

Besonders bevorzugt wird es, wenn der auf Polypropylen basierende Kunststoff in Form von Polypropylen und/oder eines Copolymers von Propylen mit einem anderen ungesättigten Comonomer, insbesondere Ethylen, vorliegt. Entsprechendes gilt für das Polyethylen, d.h. es wird bevorzugt, dass der auf Polyethylen basierende Kunststoff in Form von Polyethylen und/oder eines Copolymers von Ethylen mit einem anderen ungesättigten Comonomer, insbesondere einem α-Olefin, vorliegt. Zu den bevorzugten ungesättigten Comonomeren zählen Buten, Hexen und Octen.

Dem erfindungsgemäßen Kunststoff-Schaummaterial können verschiedene Additive einverleibt sein. Hierzu zählen Kohlenwasserstoffharze mit einem Schmelzbereich von 110 bis 160°C, vorzugsweise 125 bis 150°C. Calciumsalze der Stearinsaure, Palmitinsäure und Ölsäure sowie Mischungen aus den Salzen mit den Säuren und Säureestern sowie Antioxidantien.

Diese Additive können bereits den unterschiedlichen Ausgangsmaterialien in Form des auf Polypropylen basierenden Kunststoffs und/oder des auf Polyethylen basierenden Kunststoffs einverleibt sein, werden jedoch meistens bei der Herstellung der Polymer-Compounds hinzugegeben.

Vorstehend wurde bereits zum Ausdruck gebracht, dass in dem erfindungsgemäßen Kunststoff-Schaummaterial Anteile des auf Polyethylen basierenden Kunststoffs und Anteile des auf Polypropylen basierenden Kunststoffs gesondert vorliegen können. So hat es sich gezeigt, dass der Anteil, der auf Polypropylen basiert, die kontinuierliche Phase bildet, während der auf Polyethylen beruhende Kunststoffanteil die darin dispergierte Phase darstellt.

Es gilt als vorteilhaft, wenn der Schmelzflussindex MFI (190°C/2,16 kg) des auf Polyethylen basierenden Kunststoffs zwischen etwa 0,7 und 1,5 g/10 min, insbesondere zwischen etwa 0,8 und 1,2 g/ 10 min liegt.

Bei der Herstellung des Kunststoff-Schaummaterials geht man gemäß der Erfindung im Wesentlichen so vor, wie es vorstehend in Zusammenhang mit der Erläuterung der Offenbarung der EP 0 704 476 B1 dargestellt ist. Auf einen wesentlichen zusätzlichen Gedanken wird nachfolgend noch eingegangen. Somit wird zunächst aus den Ausgangsmaterialien, beispielsweise durch Extrusion, eine Folie oder ein anderes Formteil hergestellt. Es schließt sich die Vernetzung mit einer ionisierenden Strahlungsquelle an, insbesondere in Form einer Elektronenstrahlquelle, an. Die Art des Vernetzungsmittels, die den Ausgangsmaterialien einverleibt sind, ist entscheidend für die Produktqualität. Es ist auf jeden Fall bevorzugt, ein solches einzusetzen. Dabei hat es sich gezeigt, dass Vernetzungsmittel in Form von Divinylbenzol, Ethylvinylbenzol, Trimethylolpropantriacrylat, Trimethylolpropantrimethacrylat, 1, 6-Hexandioldiacrylat, 1,2,4-Triallyl-trimel-litat und/oder Triallylisocyanurat besonders vorteilhaft sind. Für die Zwecke der Erfindung ist es auch erforderlich, dass bei der Herstellung des angestrebten Kunststoff-Schaummaterials ein thermisch zersetzbares Schaummittel eingebunden ist.

Hierbei handelt es sich vorzugsweise um ein Azodicarbonamid, wobei ein Azodicarbonamid in Form von 1,1-Azobisformamid, Benzolsulfonylhydrazid und/oder Toluolsulfonylhydrazid besonders geeignet ist.

In Einzelfallen ist es zweckmäßig, was bereits angesprochen wurde, dem Material zusätzliche Additive einzuverleiben. Dabei kann es sich beispielsweise um Füllstoffe oder Pigmente handeln, insbesondere in Form von Kaliumaluminiumsilikat, Talkum, Kreide, Kaolin, Metalloxiden, insbesondere Titandioxid, und/oder Ruß. Von besonderer Bedeutung sind im Rahmen der Erfindung Gleitmittel, die dem Ausgangsmaterial des Kunststoff-Schaummaterials gemäß der Erfindung einverleibt sind. Hierbei kann es sich um ein inneres oder äußeres Gleitmittel handeln. Auch können beide Gleitmittel dieser Art zusammen eingesetzt werden. Als besonders vorteilhafte innere Gleitmittel haben sich erwiesen Kohlenwasser- stoffwachse mit einem Schmelzbereich von 110 bis 160°C, vorzugsweise zwischen 125 und 150°C, sowie Stearinsäureester, Palmitinsäureester sowie die Ca-Salze dieser organischen Säuren. Als besonders geeignetes äußeres Gleitmittel kommt ein festes, metallseifen-haltiges Kombinationsgleitmittel mit hochmolekularen Anteilen (Komplexester) in Frage (Fließ-Schmelzpunkt: 105 bis 115°C).

Bezüglich der Menge der eingesetzten Gleitmittel unterliegt die Erfindung keiner wesentlichen Einschränkung. Es ist bevorzugt, dass das innere Gleitmittel und das äußere Gleitmittel in einer Menge von 1 bis 5 Gew.-%, insbesondere in einer Menge von etwa 0,3 bis 2,0 Gew.-%, in dem fertigen Kunststoff-Schaummaterial enthalten sind.

Es stellt sich hier die technologische Frage, wieso es erfindungsgemäß gewiss gelungen ist, unter Einsatz eines auf Polyethylen basierenden Kunststoffs eines Schmelzflussindexes MFI (190°C/2,16 kg) von weniger als 2 g/10 min ein vorteilhaftes Kunststoff-Material zu erzeugen, obwohl dies in striktem Gegensatz zu den Angaben der eingangs behandelten EP 0 704 476 B1 steht. Dies konnte dadurch erklärt werden, dass im Rahmen der Erfindung die bezeichneten Gleitmittel herangezogen werden. So kann man davon ausgehen, dass durch Einsatz von Fließhilfsmitteln bzw. Gleitmitteln im Polypropylen/Polyethylen-Compound, bei dem neben einem hochmolekularen auf Polypropylen basierenden Kunststoff (Molekulargewicht ≥ 250000) ein auf Polyethylen basierender Kunststoff hohen Molekulargewichts eingesetzt wird, der Energieeintrag bei der Extrusion im Zweiwellenextruder so weit reduziert werden kann, dass die Materialtemperatur der Compound-Mischung unter 185°C gehalten und damit eine vorzeitige Zersetzung des thermisch empfindlichen Treibmittels, z.B. Azodicarbonamid, bei der Extrusion verhindert wird. Als Gleit- oder Fließmittel können Alkali- und Erdalkali-Salze der Stearinsäure, der Palmitinsäure oder Ölsäure sowie deren Amide und Ester eingesetzt werden. Zusätzlich können auch hochschmelzende Kohlenwasserstoffharze mit einem Schmelzbereich von 115 bis 150°C eingesetzt werden. Zusätzlich zu den Erwägungen im Hinblick auf die angesprochenen Gleit- oder Fließhilfsmittel ist zu bedenken, dass die Schmelz- und Mischzonen im Extruder so ausgelegt werden, dass ein ausreichendes und sicheres Aufschmelzen des beigesetzten Granulats erzielt und die Misch- und Schmelzenergie so begrenzt wird, dass eine sichere Temperaturkontrolle der Compoundmischung unter 185°C sichergestellt ist. Der spezifische Energieeintrag über den Antriebsmotor der Doppelschnecke sollte nicht über 0,145 kWh/kg ansteigen. Vorstehend wurde somit eine technologische Erläuterung gegeben, wieso die Erfindung, entgegen den Anweisungen des geschilderten Standes der Technik, erfolgreich in die Praxis umgesetzt werden kann. Hierin sollte jedoch keine beschränkende technologische Erklärung gesehen werden. Andere Möglichkeiten bleiben offen.

Das erfindungsgemäße Kunststoff-Schaummaterial lässt sich in üblicher Weise vorteilhaft zu Dekorlaminaten mit genarbter Dekorfolie verarbeiten. Diese Laminate werden im Allgemeinen Ober den Tiefziehprozess zu Dekoroberflächen von Bauteilen verarbeitet. Sie können aber auch in geeigneten Werkzeugen zur Bauteilherstellung unterpresst oder mit thermoplastischen Materialien hinterspritzt werden.

Grundsätzlich ist das erfindungsgemäße Kunststoff-Schaummaterial besonders geeignet zur Herstellung von Schaumlaminaten, die in Flugzeugen und Kraftfahrzeugen als Oberflächenmaterialien für Innenverkleidungen, insbesondere Schalttafeln oder Armaturenbretter, Säulen, Kraftfahrzeugseitenverkleidungen, Türverkleidungen, -Ablagen eingesetzt werden. Ihre Verarbeitung erfolgt entweder über den Tiefzieh-, Hinterpress- oder Hinterspritzprozess. Hierbei hat es sich gezeigt, dass das erfindungsgemäße Kunststoff-Schaummaterial gegenüber den vergleichbaren Produkten, die nach dem Stand der Technik hergestellt werden und bei denen ein auf Polyethylen basierender Kunststoff eines MFI-Wertes (190°C/2,16 kg) von mehr als 2 g/min eingesetzt wird, bei niedrigen Temperaturen als auch bei Raumtemperatur bessere Dehnungswerte hat, was die nachfolgenden Vergleichsversuche zeigen.

Darüber hinaus liegt der besondere Vorteil der Erfindung darin sie, dass eine zusätzliche flexibilisierende Möglichkeit für den Verarbeiter zur Verfügung stellt, auch die vom Stand der Technik ausgeschlossenen vorteilhaften auf Polyethylen basierenden Kunststoffe eines MFI-Wertes (190°C/2,16 kg) von weniger als 2 g/min einzusetzen.

Die Erfindung wird nachfolgend anhand von Vergleichsbeispielen noch naher erläutert.

### Beispiele 1 bis 5 (Herstellung von Kunststoff-Schaummaterial)

Herangezogen wird ein 2-Wellenextruder (Temperaturführung 160 bis 185°C/ Drehzahl 140 U/min). Die Kunststoffzusammensetzung wurde in Form einer 1 mm dicken Folie extrudiert. Diese wird durch Einwirkung von Elektronenstrahlen eines ß-Strahlers (1,8 MIV-Anlage) vernetzt. Der angewandte Beam-Strom beträgt bei den verschiedenen Beispielen: Beispiel 1 2,00 [mA/m/min] vierfach, Beispiel 2 1,75 [mA/m/min] vierfach, Beispiel 3 1,5 [mA/m/min] vierfach, Beispiel 4 1,75[mA/m/min] vierfach, Beispiel 5 2,5 [mA/m/min] vierfach. Alle Stromangaben gelten für eine Scanlänge von 1 m. Es schließt sich bei 270°C das Aufschäumen des vernetzten Kompaktfolienmaterials in einem Heißluftofen an. Die Rezepturen der Vergleichs-Beispiele 1 bis 5 (Zahlenangaben in Gewichtsteilen) werden in der nachfolgenden Tabelle I dargestellt.

**Tabelle I**

| **Rezepturen** | **1** | **2** | **3** | **4** | **5** |
|---|---|---|---|---|---|
| Stat. Copolymer PP mit 3 Gew.-%-Anteilen PE, MFI-Bestimmung: 230°C/2,16 kg/g pro 10 min | 70 MFI = 6 | 65 MFI = 6 | 70 M FI = 6 | 65 MFI = 6 | 70 MFI = 1 |
| PE-Copolymer mit n-Octen, Dichte = 0,930 g/cm³ MFI-Bestimmung: 190°C/2,16kg/g pro 10 min | 30 -> MFI = 0,8-1,0 | 35 -> MFI = 0,8-1,0 | 30 MFI = 0,8-1,0 | 35 MFI = 0,8-1,0 | 30 MFI = 0,8-1,0 |
| Vernetzungshilfsmittel (TMPTMA*****) | 2,0 | 2,5 | 2,2 | 2,2 | 1,0 |
| Treibmittel (Azodicarbonamid) | 8,5 | 8,5 | .7,2. | 7,2 | 7,5 |
| Antioxydans**** | 0,5 | 0,5 | 0,5 | 0,5 | 0,5 |
| Piqmentmasterbatch, schwarz | 2 | 2 | 2 | 2 | 2 |
| Gleitmittel 1* | 1,0 | 1,0 | 0,6 | 0,6 | 0,6 |
| Gleitmittel 2** | - | - | 1,0 | 1,0 | - |
| Gleitmittel 3*** | - | - | - | - | 1,0 |

| | | | | | |
|---|---|---|---|---|---|
| Anmerkungen: * festes, metallseifenhaltiges Kombinationsgleitmittel mit hochmolekularen Anteilen (Komplex Ester), Fließschmelzpunkt 105 bis 115°C, Säurezahl < 12, Ca-Gehalt 1,4 bis 1,6%, Flammpunkt > 260°C; ** Hartparaffin mit-hohem Schmelzpunkt von 104 bis 110°C, weiß, rein kristallin, Flammpunkt > 280°C, Säurezahl < 0,1, Viskosität bei 120°C 10 mPa.s; *** zähelastisches Wachs mit hohem Schmelzpunkt von etwa 150°C und einer Dichte von 0,94 **** Pentaerythrit-Tetrakis (3-(3,5-di-tert-butyl-4-hydroxyphenyl)propionat; *****Trimethylolpropantrimethacrylat. | | | | | |

Die Schaumeigenschaften des erhaltenen Kunststoff-Schaummaterials nach den bezeichneten Beispielen 1 bis 5 gemäß der Erfindung werden in der nachfolgenden Tabelle II dargestellt:

**Tabelle II**

| **Eigenschaften** | **1** | **2** | **3** | **4** | **5** |
|---|---|---|---|---|---|
| Dichte [kg/m³] ISO 845 | 65 | 77 | 60 | 80 | 66 |
| Dicke [mm] | 2,1 | 2,02 | 2,2 | 2,2 | 2,1 |
| Reißfestigkeit [kPa] nach ISO 527-3/Probekörper DIN 52910 | | | | | |
| Raumtemperatur (20°C) | 1374 | 1779 | 1290 | 1373 | 1331 |
| 120°C | 499 | 623 | 471 | 509 | 490 |
| 150°C | 81 | 189 | 61 | 83 | 83 |
| Dehnung [%] nach ISO 527-3/Probekörper DIN 52910 | | | | | |
| Raumtemperatur (20°C) | 270 | 247 | 280 | 241 | 283 |
| 120°C | 442 | 296 | 520 | 407 | 443 |
| 150°C | 173 | 189 | 161 | 197 | 209 |
| Schrumpf [%] 130°C/24h | 2,7 | 2,7 | 2,5 | 2,6 | 2,7 |
| Druckverformungsrest [%] 50% Verformung nach 0,5/24h | 37/25 | 38/27 | 35/24 | 36/28. | 34/26 |
| Gelgehalt [%] 145°C/24h in Xylol | 38,5 | 53 | 45 | 49 | 39 |

Es lassen sich Kunststoff-Schaummaterialien herstellen, die bezüglich der wesentlichen Kennzeichen von praktischem Wert sind.

### Vergleichsbeispiele 1 und 2 (Herstellung und Eigenschaften)

Die Rezepturen der Vergleichsbeispiele 1 und 2 gehen aus der nachfolgenden Tabelle III hervor:

**Tabelle III**

| **Rezepturen** | **1** | **2** |
|---|---|---|
| Stat. Copolymer PP mit 3 Gew.-% Anteilen PE, MFI-Bestimmung: 230°C/2,16 kg/g pro 10 min | 70 MFI = 6 | 65 MFI = 6 |
| PE-Copolymer mit n-Octen; Dichte 0,936 g/m³, MFI-Bestimmung: 190°C/2,16 kg/g pro 10 min | 30 MFI = 6 | 35 MFI = 6 |
| Vernetzungshilfsmittel (TMPTMA) | 2,2 | 3,0 |
| Treibmittel (Azodicarbonamid) | 8,2 | 8,5 |
| Antioxydans | 0,5 | 0,5 |
| Pigmentmasterbatch (schwarz) | 2,0 | 2,0 |
| Gleitmittel 1 | 1,0 | 1,0 |
| Gleitmittel 2 | - | - |

| | | |
|---|---|---|
| Anmerkungen: Bezüglich des Vernetzungshilfsmittels, des Antioxidanses und der Gleitmittel 1 und 2 sei auf die Anmerkungen zu den vorstehenden erfindungsgemäßen Rezepturen verwiesen. | | |

Die Herstellung der Vergleichsfolien erfolgte durch Extrusion entsprechend den Beispielen 1 bis 5 und die Vernetzung auf einer 1,8 MeV-Anlage, wobei für Vergleichsbeispiel 1 2,0 [mA/m/min] vierfach und Vergleichsbeispiel 2 2,1 [mA/m/min] vierfach gilt. Das Schäumen erfolgte ebenfalls in Übereinstimmung mit den Beispielen 1 bis 5. In der folgenden Tabelle IV werden die Schaumeigenschaften der nach den Vergleichsbeispielen 1 und 2 erhaltenen Kunststoff-Schaummaterialien dargestellt:

**Tabelle IV**

| **Eigenschaften** | **1** | **2** |
|---|---|---|
| Dichte [kg/m³] ISO 845 | 67 | 65 |
| Dicke [mm] | 1,95 | 2,1 |
| Reißfestigkeit [kPa] | | |
| nach ISO 527-3/Probekörper DIN 52910 | | |
| RT | 1230 | 1463 |
| 120°C | 500 | 398 |
| 150°C | 75 | 98 |
| Dehnung [%] | | |
| nach ISO 527-3/Probekörper DIN 52910 | | |
| RT | 205 | 212 |
| 120°C | 495 | 240 |
| 150°C | 180 | 129 |
| Schrumpf [%] 130°C/24h | 2,5 | 2,6 |
| Druckverformungsrest [%] 50% Verformung nach 0,5/24h | 37/28 | 37/24 |
| Gelgehalt [%] 145°C/24h in Xylol | 46 | 56 |

## Patentansprüche

1. Kunststoff-Schaummaterial auf Basis von Polyolefinen, die 50 bis 90 Gew.-% auf Polypropylen basierende Kunststoffe mit einem Schmelzflussindex MFI (230 °C/2,16 kg) von 0,5 bis 0,9 g/10 min und 10 bis 50 Gew.-% auf Polyethylen basierende Kunststoffe mit einem Schmelzflussindex MFI (190 °C/2,16 kg) zwischen 0,5 und 1,9 g/10 min enthält, wobei das Kunststoff-Schaummaterial eine Dichte von 0,03 bis 0,2 g/cm³ aufweist und 20 bis 70 Gew.-% vernetzten Polyolefin-Anteil und ein Gleitmittel enthält und wobei das Kunststoff-Schaummaterial durch Vernetzung mit einer ionisierenden Strahlungsquelle erhältlich ist und wobei der auf Polyethylen basierende Kunststoff in einer kontinuierlichen Matrix auf Basis des auf Polypropylen basierenden Kunststoffes dispergiert ist

2. Kunststoff-Schaummaterial nach Anspruch 1, **dadurch gekennzeichnet, dass** der vernetzte Polyolefin-Anteil 55 bis 95 Gew.-% auf Polypropylen basierendem vernetzten Kunststoff und 5 bis 45 Gew.-% auf Polyethylen basierendem vernetzten Kunststoff enthält.

3. Kunststoff-Schaummaterial nach Anspruch 1 oder 2, **dadurch gekennzeichnet, dass** der auf Polypropylen basierende Kunststoff in Form von Polypropylen und/oder eines Copolymers von Propylen mit einem anderen ungesättigten Comonomer vorliegt.

4. Kunststoff-Schaummaterial nach einem der Ansprüche 1 bis 3, **dadurch gekennzeichnet, dass** der auf Polyethylen basierende Kunststoff in Form von Polyethylen und/oder eines Copolymers von Ethylen mit einem anderen ungesättigten Comonomer vorliegt.

5. Kunststoff-Schaummaterial nach mindestens einem der vorhergehenden Ansprüche, **dadurch gekennzeichnet, dass** es ein Vernetzungsmittel enthält.

6. Kunststoff-Schaummaterial nach Anspruch 5, **dadurch gekennzeichnet, dass** das Vernetzungsmittel ausgewählt ist aus: Divinylbenzol, Ethylvinylbenzol, Trimethylolpropantriacrylat, Trimethylolpropantrimethacrylat, 1,6-Hexandioldiacrylat, 1,2,4-Triallyl-trimellitat und/oder Triallylisocyanurat.

7. Kunststoff-Schaummaterial nach mindestens einem der vorhergehenden Ansprüche, erhältlich anhand eines thermisch zersetzbaren Schaummittels.

8. Kunststoff-Schaummaterial nach Anspruch 7, **dadurch gekennzeichnet, dass** das Schaummittel eine Azodicarbonamid-Verbindung ist.

9. Kunststoff-Schaummaterial nach Anspruch 8, **dadurch gekennzeichnet, dass** das Azodicarbonamid 1,1-Azobisformamid, Benzolsulfanylhydrazid und/oder Toluolsulfonylhydrazid ist.

10. Kunststoff-Schaummaterial nach Anspruch 1, **dadurch gekennzeichnet, dass** der Schmelzindex MFI (190 °C/2,16 kg) des auf Polyethylen basierenden Kunststoffes zwischen etwa 0,7 und 1,5 g/10 min liegt.

11. Kunststoff-Schaummaterial nach mindestens einem der vorhergehenden Ansprüche, **dadurch gekennzeichnet, dass** es ein Antioxidans enthält.

12. Kunststoff-Schaummaterial nach mindestens einem der vorhergehenden Ansprüche, **dadurch gekennzeichnet, dass** es einen Füllstoff enthält.

13. Kunststoff-Schaummaterial nach Anspruch 12, **dadurch gekennzeichnet, dass** die Füllstoffe in Form von Kaliumaluminiumsilikat, Talkum, Kreide, Kaolin, Metalloxiden, insbesondere Titandioxid, und/oder Ruß vorliegen.

14. Kunststoff-Schaummaterial nach mindestens einem der vorhergehenden Ansprüche, **dadurch gekennzeichnet, dass** es ein inneres und/oder äußeres Gleitmittel enthält.

15. Kunststoff-Schaummaterial nach Anspruch 14, **dadurch gekennzeichnet, dass** das innere Gleitmittel ein hochschmelzendes Paraffinwachsund/oder das äußere Gleitmittel ein metallseifenhaltiges Kombinationsgleitmittel darstellt.

16. Kunststoff-Schaummaterial nach mindestens einem der vorhergehenden Ansprüche, **dadurch gekennzeichnet, dass** es das Gleitmittel in einer Menge von etwa 1 bis 5 Gew. -%enthält.

17. Verwendung eines Kunststoff-Schaummaterials nach mindestens einem der vorhergehenden Ansprüche als tiefgezogenes Formteil, in Flugzeugen, Kraftfahrzeugen, für Kraftfahrzeuginnenverkleidungen oder -verkleidungsteile, Kraftfahrzeugseitenverkleidungen, -türverkleidungen, -ablagen und/oder-außenverkleidungen.

## Claims

1. Plastics foam material based on polyolefins comprising from 50 to 90% by weight of polypropylene-based plastics with a melt flow index MFI (230°C/2.16 kg) of from 0.5 to 0.9 g/10 min and from 10 to 50% by weight of polyethylene-based plastics with a melt flow index MFI (190°C/2.16 kg) of from 0.5 to 1.9 g/10 min, where the plastics foam material has a density of from 0.03 to 0.2 g/cm³ and comprises from 20% to 70% by weight of crosslinked polyolefin content and comprises a lubricant, and where the plastics foam material is obtainable via crosslinking by an ionizing radiation source, and where the polyethylene-based plastic has been dispersed in a continuous matrix based on the polypropylene-based plastic.

2. Plastics foam material according to Claim 1, **characterized in that** the crosslinked polyolefin content comprises from 55 to 95% by weight of crosslinked polypropylene-based plastic and from 5 to 45% by weight of crosslinked polyethylene-based plastic.

3. Plastics foam material according to Claim 1 or 2, **characterized in that** the polypropylene-based plastic takes the form of polypropylene and/or of a copolymer of propylene with another unsaturated comonomer.

4. Plastics foam material according to any of Claims 1 to 3, **characterized in that** the polyethylene-based plastic takes the form of polyethylene and/or of a copolymer of ethylene with another unsaturated comonomer.

5. Plastics foam material according to at least one of the preceding claims, **characterized in that** it comprises a crosslinking agent.

6. Plastics foam material according to Claim 5, **characterized in that** the crosslinking agent is selected from: divinylbenzene, ethylvinylbenzene, trimethylolpropane triacrylate, trimethylolpropane trimethacrylate, 1,6-hexanediol diacrylate, triallyl 1,2,4-trimellitate and/or triallyl isocyanurate.

7. Plastics foam material according to at least one of the preceding claims, obtainable by using a thermally decomposable foaming agent.

8. Plastics foam material according to Claim 7, **characterized in that** the foaming agent is an azodicarbonamide compound.

9. Plastics foam material according to Claim 8, **characterized in that** the azodicarbonamide is 1,1-azobisformamide, benzenesulphanyl hydrazide and/or toluenesulphonyl hydrazide.

10. Plastics foam material according to Claim 1, **characterized in that** the melt index MFI (190°C/2.16 kg) of the polyethylene-based plastic is about 0.7 to 1.5 g/10 min.

11. Plastics foam material according to at least one of the preceding claims, **characterized in that** it comprises an antioxidant.

12. Plastics foam material according to at least one of the preceding claims, **characterized in that** it comprises a filler.

13. Plastics foam material according to Claim 12, **characterized in that** the fillers take the form of potassium aluminium silicate, talc powder, chalk, kaolin, metal oxides, in particular titanium dioxide, and/or carbon black.

14. Plastics foam material according to at least one of the preceding claims, **characterized in that** it comprises an internal and/or external lubricant.

15. Plastics foam material according to Claim 14, **characterized in that** the internal lubricant is a high-melting-point paraffin wax and/or the external lubricant is a combination lubricant comprising metal soap.

16. Plastics foam material according to at least one of the preceding claims, **characterized in that** it comprises a quantity of about 1 to 5% by weight of the lubricant.

17. Use of a plastics foam material according to at least one of the preceding claims as thermoformed moulding, in aircraft, in motor vehicles, or for motor-vehicle-interior cladding or parts thereof, motor-vehicle side cladding, motor-vehicle door cladding, motor-vehicle parcel shelves and/or external motor-vehicle cladding.

## Revendications

1. Matériau alvéolaire en plastique à base de polyoléfines, qui contient 50 à 90 % en poids de plastiques à base de polypropylène ayant un indice de fluidité à chaud MFI (230 °C/2,16 kg) de 0,5 à 0,9 g/10 minutes et 10 à 50 % en poids de plastiques à base de polyéthylène ayant un indice de fluidité à chaud MFI (190 °C/2,16 kg) compris entre 0,5 et 1,9 g/10 minutes, le matériau alvéolaire en plastique présentant une densité de 0,03 à 0,2 g/cm³ et contenant 20 à 70 % en poids de fraction polyoléfine réticulée et un agent lubrifiant, et le matériau alvéolaire en plastique pouvant être obtenu par réticulation avec une source de rayonnement ionisant, et le plastique à base de polyéthylène étant dispersé dans une matrice continue à base du plastique à base de polypropylène.

2. Matériau alvéolaire en plastique selon la revendication 1, **caractérisé en ce que** la fraction polyoléfine réticulée contient 55 à 95 % en poids de plastique réticulé à base de polypropylène et 5 et 45 % en poids de plastique réticulé à base de polyéthylène.

3. Matériau alvéolaire en plastique selon la revendication 1 ou 2, **caractérisé en ce que** le plastique à base de polypropylène se présente sous la forme de polypropylène et/ou d'un copolymère de propylène avec un autre comonomère insaturé.

4. Matériau alvéolaire en plastique selon l'une quelconque des revendications 1 à 3, **caractérisé en ce que** le plastique à base de polyéthylène se présente sous la forme de polyéthylène et/ou d'un copolymère d'éthylène avec un autre comonomère insaturé.

5. Matériau alvéolaire en plastique selon au moins l'une quelconque des revendications précédentes, **caractérisé en ce qu'**il contient un agent de réticulation.

6. Matériau alvéolaire en plastique selon la revendication 5, **caractérisé en ce que** l'agent de réticulation est choisi parmi : le divinylbenzène, l'éthylvinylbenzène, le triacrylate de triméthylolpropane, le triméthacrylate de triméthylolpropane, le diacrylate de 1,6-hexanediol, le trimellitate de 1,2,4-triallyle et/ou l'isocyanurate de triallyle.

7. Matériau alvéolaire en plastique selon au moins l'une quelconque des revendications précédentes, pouvant être obtenu à partir d'un agent moussant décomposable thermiquement.

8. Matériau alvéolaire en plastique selon la revendication 7, **caractérisé en ce que** l'agent moussant est un composé d'azodicarbonamide.

9. Matériau alvéolaire en plastique selon la revendication 8, **caractérisé en ce que** l'azodicarbonamide est le 1,1-azobisformamide, l'hydrazide de benzène-sulfanyle et/ou l'hydrazide de toluène-sulfonyle.

10. Matériau alvéolaire en plastique selon la revendication 1, **caractérisé en ce que** l'indice de fluidité à chaud MFI (190 °C/2,16 kg) du plastique à base de polyéthylène est compris entre environ 0,7 et 1,5 g/10 minutes.

11. Matériau alvéolaire en plastique selon au moins l'une quelconque des revendications précédentes, **caractérisé en ce qu'**il contient un antioxydant.

12. Matériau alvéolaire en plastique selon au moins l'une quelconque des revendications précédentes, **caractérisé en ce qu'**il contient une charge.

13. Matériau alvéolaire en plastique selon la revendication 12, **caractérisé en ce que** les charges se présentent sous la forme de silicate de potassium et d'aluminium, de talc, de craie, de kaolin, d'oxydes de métaux, notamment de dioxyde de titane, et/ou de noir de carbone.

14. Matériau alvéolaire en plastique selon au moins l'une quelconque des revendications précédentes, **caractérisé en ce qu'**il contient un agent lubrifiant interne et/ou externe.

15. Matériau alvéolaire en plastique selon la revendication 14, **caractérisé en ce que** l'agent lubrifiant interne est une cire de paraffine à point de fusion élevé et/ou l'agent lubrifiant externe est un agent lubrifiant combiné contenant des savons métalliques.

16. Matériau alvéolaire en plastique selon au moins l'une quelconque des revendications précédentes, **caractérisé en ce qu'**il contient l'agent lubrifiant en une quantité d'environ 1 à 5 % en poids.

17. Utilisation d'un matériau alvéolaire en plastique selon au moins l'une quelconque des revendications précédentes en tant que pièce moulée emboutie, dans des aéronefs, dans des véhicules automobiles, pour des habillages ou parties d'habillages intérieurs de véhicules automobiles, des habillages latéraux, des habillages de portes, des tablettes et/ou des habillages extérieurs de véhicules automobiles.
